# EUROPÄISCHE PATENTSCHRIFT

(11) **EP 1 700 729 B1**
(45) Veröffentlichungstag und Bekanntmachung des Hinweises auf die Patenterteilung: **25.03.2009**
(21) Anmeldenummer: 05027773.0
(22) Anmeldetag: 19.12.2005
(51) Int. Cl.: B60K 5/02, B60K 17/16, F02F 7/00, F01M 11/00

(54) **Antriebseinheit für ein Kraftfahrzeug**
Drive unit for a motor vehicle
Groupe motopropulseur pour un véhicule automobile

(30) Priorität: 11.03.2005 DE 102005011321
(43) Veröffentlichungstag der Anmeldung: 13.09.2006
(73) Patentinhaber: Dr. Ing. h.c. F. Porsche Aktiengesellschaft, 70435 Stuttgart (DE)
(72) Erfinder: Apel, Christian, 71287 Weissach (DE); Krämer, Matthias, 71297 Mönsheim (DE); Kraxner, Dieter, 75449 Wurmberg (DE); Esser, Joachim, 71277 Rutesheim (DE); Tiede, Klaus, 74343 Sachsenheim (DE); Netzker, Ralph-Maria, 71636 Ludwigsburg (DE); Fuchs, Robert, 75446 Wiernsheim (DE)

(56) Entgegenhaltungen:
- EP-A- 0 473 202
- DE-A1- 3 323 626
- DE-A1- 3 920 638
- DE-A1- 4 019 765
- DE-A1- 19 926 422
- US-A- 3 052 313
- US-A- 3 213 958
- PATENT ABSTRACTS OF JAPAN Bd. 015, Nr. 318 (M-1146), 14. August 1991 (1991-08-14) -& JP 03 118221 A (MAZDA MOTOR CORP), 20. Mai 1991 (1991-05-20)

## Beschreibung

Die Erfindung betrifft eine Antriebseinheit für ein Kraftfahrzeug gemäß den Merkmalen des Oberbegriffs des Patentanspruchs 1.

Aus der DE 33 23 626 C2, die den Oberbegriff des Anspruchs 1 bildet, ist eine Antriebseinheit bekannt, bei der die eine Ölwanne der Brennkraftmaschine durchstoßende Antriebswelle auf der einen Seite im Kurbelgehäuse und auf der anderen Seite an bzw. in der Ölwanne gelagert ist. Damit soll eine kompakte Bauweise der Antriebseinheit ermöglicht werden, so dass bei genügender Bodenfreiheit eine Anhebung des Fahrzeugaufbaus nicht erforderlich ist.

Die JP 0311 82 21A zeigt ebenfalls eine Antriebseinheit nach dem Oberbegriff des Anspruchs 1.

Aufgabe der Erfindung ist es, die Struktursteifigkeit einer derartigen gattungsgemäßen Antriebseinheit zur Aufnahme der dynamischen Kräfte weiter zu verbessern bei einer gleichzeitig tiefen Einbauposition der Motoreinheit im Fahrzeug, damit eine flache Gesamtfrontgeometrie mit einem niedrigen Fahrzeugschwerpunkt erreichbar ist.

Die Aufgabe wird durch die im Anspruch 1 angegebenen Merkmale gelöst.

Dadurch, dass die Trennebene zwischen einem Kurbelgehäuseunterteil und einem Ölführungsgehäuse der Motoreinheit als Lagerebene für die Antriebswelle vorgesehen ist, können einerseits das Gewicht der Motoreinheit bzw. der Antriebseinheit sowie die im Betrieb auftretenden dynamischen Kräfte sicher aufgenommen werden und andererseits aufgrund der Einbaulage für die Antriebswelle eine tiefe Einbauposition für die Motoreinheit erreicht werden.

Durch die in den Unteransprüchen angegebenen Merkmale sind weitere vorteilhafte Ausgestaltungen und Weiterbildungen der Antriebseinheit möglich.

Das seitlich am Kurbelgehäuse angeflanschte Ausgleichsgetriebe bzw. Achsdifferenzial weist ein Gehäuse auf, das gleichzeitig als Befestigungs- bzw. Lagerpunkt für den Motor am Fahrzeugträger bzw. der Fahrzeugkarosserie vorgesehen ist.

Eine der beiden Antriebswellen ist auf der dem Achsdifferenzial gegenüberliegenden Seite des Motorgehäuses zusätzlich durch eine am Kurbelgehäuse verschraubte Lagerkonsole abgestützt. Damit wird auf vorteilhafte Art und Weise die Steifigkeit der Lagereinheit für die Antriebswelle erhöht.

Ein Ausführungsbeispiel der Erfindung ist in der Zeichnung dargestellt und wird im nachfolgenden näher beschrieben:

### Es zeigen

- Fig. 1: eine Seitenansicht einer Motoreinheit mit angeflanschtem Achsdifferenzialgehäuse,
- Fig. 2: eine Seitenansicht der Motoreinheit gemäß Figur 1 ohne Achsdifferenzialgehäuse
- Fig. 3: ein Querschnitt durch die Motoreinheit im Bereich der Antriebswellen,
- Fig. 4: eine erste Stirnansicht der Motoreinheit und
- Fig. 5: eine zweite Stirnansicht der Motoreinheit.

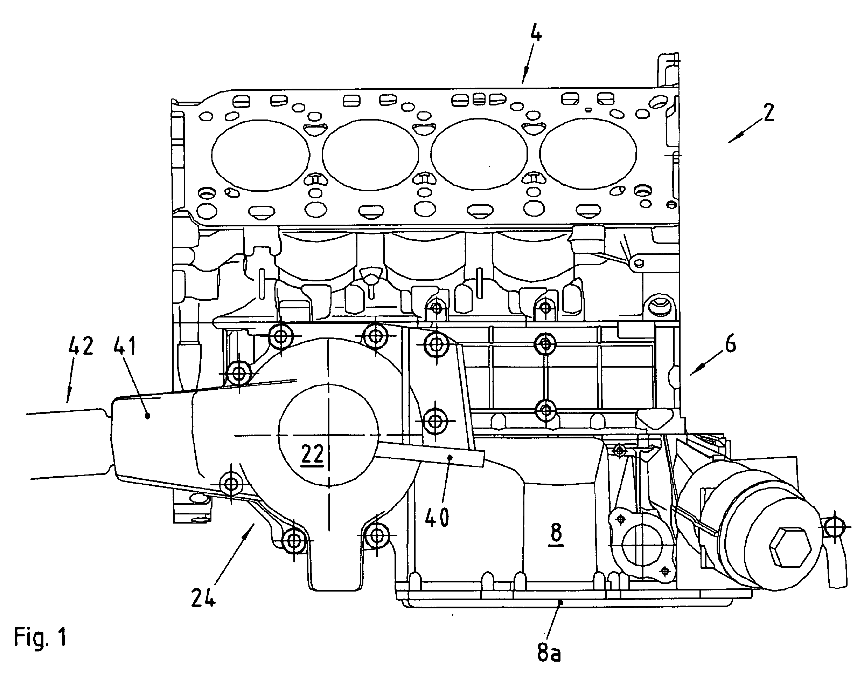

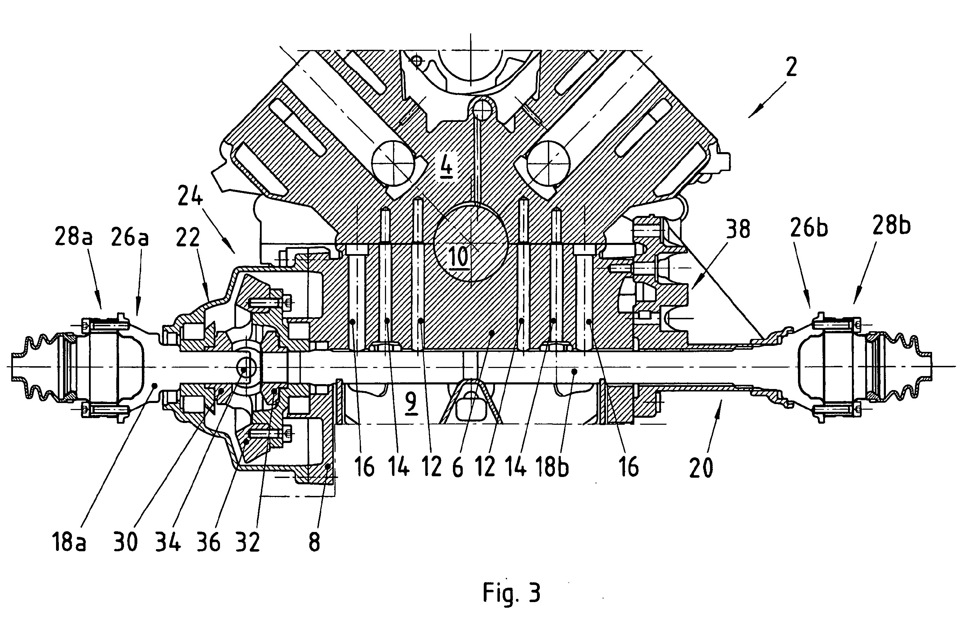

Der in Fig. 1 dargestellte V8-Motor weist ein Motorgehäuse 2 auf, das im wesentlichen aus einem Kurbelgehäuseoberteil 4, einem Kurbelgehäuseunterteil 6 und einem sich daran anschließenden Ölführungsgehäuse 8 besteht, wobei im Ölführungsgehäuse 8 ein Ölsammelraum 9 ausgebildet ist, der nach unten hin durch einen Ölwannendeckel 8a abgeschlossen ist. Wie aus Fig. 1 und 3 ersichtlich, sind die Zylinderlaufflächen im Kurbelgehäuseoberteil 4 integriert. In der Trennebene zwischen Kurbelgehäuseober- und unterteil 4, 6 sind jeweils die Hauptlagerhälften für die Kurbelwelle 10 integriert. Zur Verschraubung des Kurbelgehäuseunterteils 6 am Kurbelgehäuseoberteil 4 ist eine innere und eine äußere Hauptlagerverschraubung 12, 14 vorgesehen. An die äußere Hauptlagerverschraubung 14 schließen sich - wie aus Fig. 3 erkennbar - nach außen hin Ölrückführkanäle 16 an, über die Schmieröl aus dem Zylinderkopf in den im Ölführungsgehäuse 8 ausgebildete Ölsumpf zurückgeführt wird.

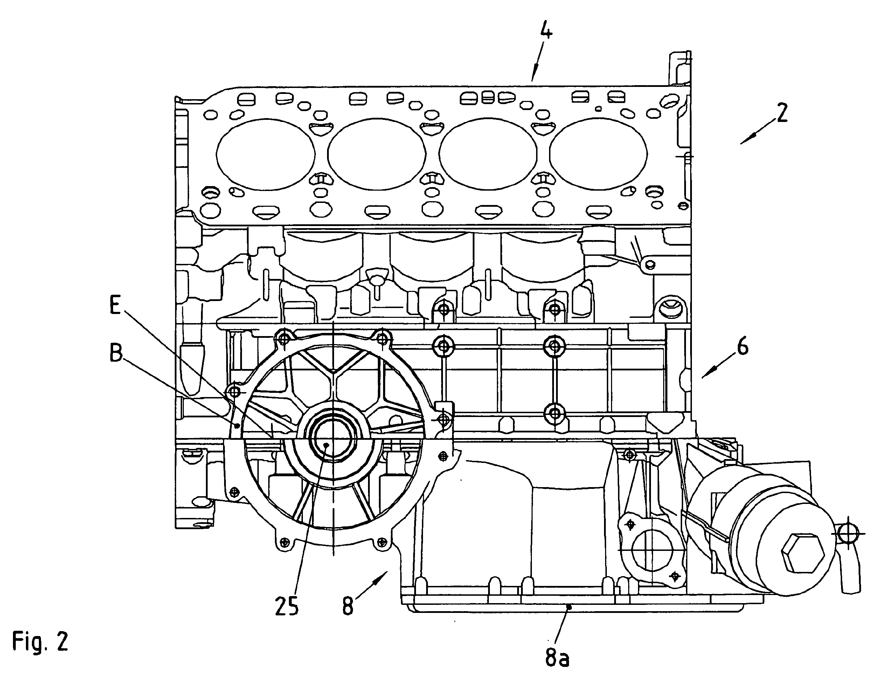

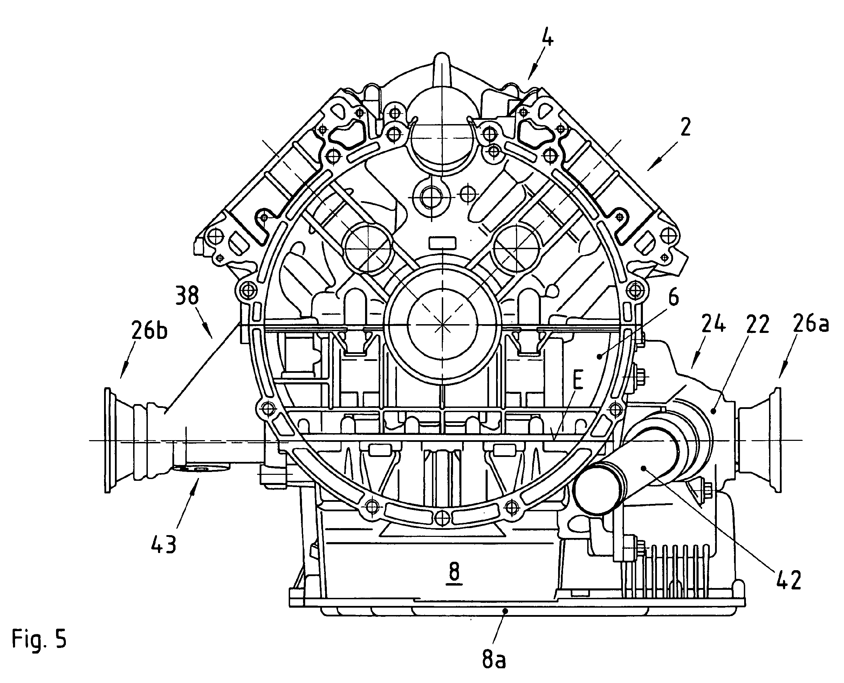

In der Trennebene E (siehe z.B. Fig. 2 und 5) zwischen Kurbelgehäuseunterteil 6 und dem Ölführungsgehäuse 8 verlaufen zwei Antriebswellen 18a, 18b eines Vorderachsantriebs 20, wobei die -gemäß Fig. 3- rechte Antriebswelle 18b komplett in der Trennebene E zwischen Kurbelgehäuseunterteil 6 und Ölführungsgehäuse 8 gelagert ist. Die linke Antriebswelle 18a ist in einem Gehäuse 22 eines Achsdifferenzials 24 gelagert, das seitlich am Ölführungsgehäuse 8 und dem Kurbelgehäuseunterteil 6 befestigt ist. In Figur 2 ist der am Kurbelgehäuseunterteil 6 und am Ölführungsgehäuse 8 jeweils halbkreisförmig ausgebildete Befestigungsflansch B für das Gehäuse 22 des Achsdifferenzials 24 erkennbar; durch die Öffnung 25 ist die rechte Antriebswelle 18b hindurchgeführt. An den beiden äußeren Enden der Antriebswellen 18a, 18b sind jeweils ein Flansch 26a, 26b ausgebildet, an denen zu den Fahrzeugrädern führende Gelenkwellen 28a, 28b befestigt sind. An den beiden anderen Enden der Antriebswellen 18a, 18b ist jeweils ein Achswellenzahnrad 30 und 32 befestigt, die beide mit zwei Ausgleichskegelzahnrädern (in Fig. 3 nicht erkennbar) kämmend im Eingriff stehen, wobei letztere auf einem ein- bzw. zweiteilig ausgebildeten Achsbolzen 34 gelagert sind. Weiterhin ist im Gehäuse 22 des Achsdifferenzials 24 das Tellerrad 36 aufgenommen, das auf bekannte Art und Weise über ein nicht dargestelltes Antriebskegelrad angetrieben ist. Auf der dem Achsdifferenzial 24 gegenüberliegenden Seite des Motorgehäuses 2 ist für die Lagerung der rechten Antriebswelle 18b eine Lagerkonsole 38 vorgesehen, die am Kurbelgehäuseunter- und -oberteil 6, 4 befestigt ist.

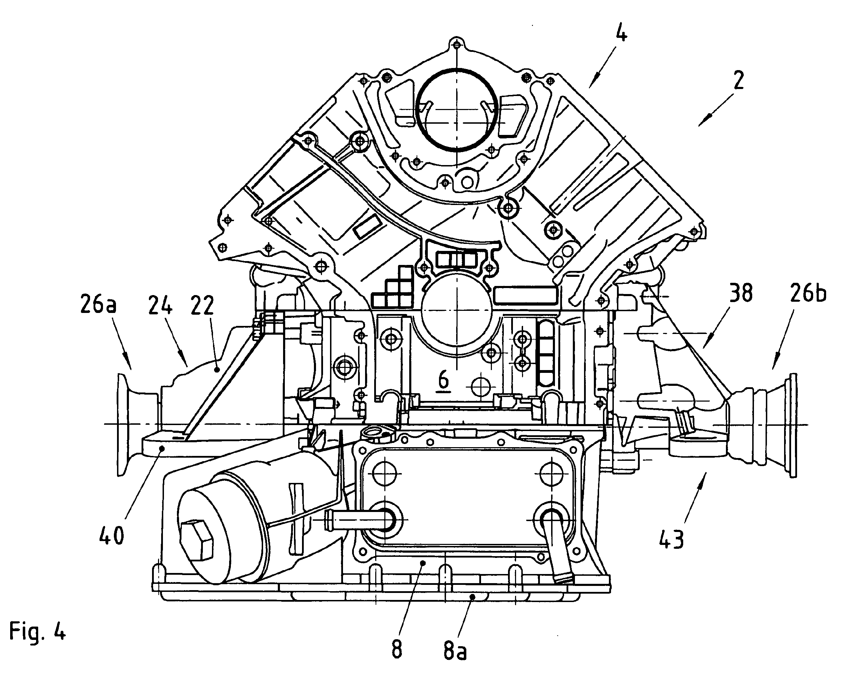

Wie aus Fig. 1 und 4 ersichtlich, ist aus dem Gehäuse 22 des Achsdifferenzials 24 einstückig ein erster Befestigungsflansch 40 herausgebildet, der zur Befestigung der Motoreinheit 2 am Fahrgestell bzw. der Karosserie des Kraftfahrzeuges dient. Auf der gegenüberliegenden Seite ist an der Lagerkonsole 38 ein zweiter Befestigungsflansch 43 vorgesehen, der als zweiter Lagerpunkt für die Befestigung des Motorgehäuses 2 dient. Die Anbindung der Motoreinheit am Fahrgestell bzw. an der Karosserie erfolgt dabei z.B. über entsprechende Hydrolager.

Im vorliegenden Ausführungsbeispiel ist das mit der Motoreinheit 2 versehene Kraftfahrzeug als Allradfahrzeug ausgebildet; dazu weist das Gehäuse 22 des Achsdifferenzials 24 einen Anschlussflansch 41 auf, in dem eine Welle 42 mit dem Antriebskegelrad für das Tellerrad 36 aufgenommen ist, während das andere Ende der Welle 42 zum Verteilergetriebe führt.

## Patentansprüche

1. Antriebseinheit für ein Kraftfahrzeug, mit einer Motoreinheit und einem daran angeordneten Achsdifferenzial (24), sowie mit zumindest teilweise im Motorgehäuse (2) gelagerten Antriebswellen (18a, 18b) für die Fahrzeugräder,
**dadurch gekennzeichnet, dass**
die Trennebene E zwischen Kurbelgehäuseunterteil (6) und Ölführungsgehäuse (8) des Motorgehäuses (2) als Lagerung für mindestens eine Antriebswelle (18a, 18b) vorgesehen ist, so dass eine Öffnung (25) zur Aufnahme der Antriebswelle (18a, 18b) am Kurbelgehäuseunterteil (6) und am Ölführungsgehäuse (8) ausgebildet ist.

2. Antriebseinheit nach Anspruch 1, **dadurch gekennzeichnet, dass** das Gehäuse (22) des Achsdifferenzials (24) einen Befestigungsflansch (40) aufweist, der als Lagerpunkt für das Motorgehäuse (2) dient.

3. Antriebseinheit nach Anspruch 1 oder 2, **dadurch gekennzeichnet, dass** auf der dem Achsdifferenzial gegenüberliegenden Seite des Motorgehäuses (2) die Antriebswelle (18b) zusätzlich durch eine am Kurbelgehäuse (4, 6) verschraubte Lagerkonsole (38) abgestützt ist.

4. Antriebseinheit nach Anspruch 3, **dadurch gekennzeichnet, dass** die Lagerkonsole (38) einen Befestigungsflansch (43) aufweist, der als zweiter Lagerpunkt für das Motorgehäuse (2) vorgesehen ist.

## Claims

1. Drive unit for a motor vehicle, having an engine unit and having an axle differential (24) which is arranged thereon and having driveshafts (18a, 18b), which are mounted at least partially in the engine housing (2), for the vehicle wheels,
**characterized in that**
the parting plane E between the crankcase lower half (6) and the oil guiding housing (8) of the engine housing (2) is provided as a mounting arrangement for at least one driveshaft (18a, 18b), such that an opening (25) for receiving the driveshaft (18a, 18b) is formed on the crankcase lower half (6) and on the oil guiding housing (8).

2. Drive unit according to Claim 1, **characterized in that** the housing (22) of the axle differential (24) has a fastening flange (40) which serves as a mounting point for the engine housing (2).

3. Drive unit according to Claim 1 or 2, **characterized in that,** on that side of the engine housing (2) which is situated opposite the axle differential, the driveshaft (18b) is additionally supported by a mounting bracket (38) which is screwed to the crankcase (4, 6).

4. Drive unit according to Claim 3, **characterized in that** the mounting bracket (38) has a fastening flange (43) which is provided as a second mounting point for the engine housing (2).

## Revendications

1. Unité d'entraînement pour un véhicule automobile, comprenant une unité de moteur et un différentiel d'essieu (24) disposé sur celle-ci, ainsi que des arbres d'entraînement (18a, 18b) montés au moins en partie dans le carter moteur (2), pour les roues du véhicule,
**caractérisée en ce que**
le plan de séparation E entre la partie inférieure du carter de vilebrequin (6) et le carter de guidage d'huile (8) du carter moteur (2) est prévu sous forme de support sur palier pour au moins un arbre d'entraînement (18a, 18b), de sorte qu'une ouverture (25) pour recevoir l'arbre d'entraînement (18a, 18b) est réalisée sur la partie inférieure du carter de vilebrequin (6) et sur le carter de guidage d'huile (8).

2. Unité d'entraînement selon la revendication 1, **caractérisée en ce que** le carter (22) du différentiel d'essieu (24) présente une bride de fixation (40) qui sert de point de palier pour le carter moteur (2).

3. Unité d'entraînement selon la revendication 1 ou 2, **caractérisée en ce que** l'arbre d'entraînement (18b) du côté du carter moteur (2) opposé au différentiel d'essieu est en outre supporté par une console de palier (38) vissée sur le carter de vilebrequin (4, 6).

4. Unité d'entraînement selon la revendication 3, **caractérisée en ce que** la console de palier (38) présente une bride de fixation (43) qui est prévue en tant que deuxième point de palier pour le carter moteur (2).
